# FASCICULE DE BREVET EUROPEEN

(11) **EP 0 706 625 B1**
(45) Date de publication et mention de la délivrance du brevet: **28.01.1998**
(21) Numéro de dépôt: 94920998.5
(22) Date de dépôt: 30.06.1994
(51) Int. Cl.: F16L 11/12

(54) **PROFILE TUBULAIRE, EN PARTICULIER A USAGE DE CONDUIT DE PASSAGE DE FLUIDE**
ROHRPROFIL, INSBESONDERE ZUM GEBRAUCH ALS FLÜSSIGKEITSLEITUNG
TUBULAR SECTION FOR USE AS A FLUID FLOW PIPE IN PARTICULAR

(30) Priorité: 01.07.1993 FR 9308047
(43) Date de publication de la demande: 17.04.1996
(73) Titulaire: HUTCHINSON, F-75008 Paris (FR)
(72) Inventeur: SIMON, Jean-Michel, F-92140 Clamart (FR)
(74) Mandataire: Ramey, Daniel
(86) Numéro de dépôt international: FR9400796
(87) Numéro de publication internationale: WO9501529

(56) Documents cités:
- WO-A-92/19900
- DE-A- 3 006 138
- DE-A- 3 942 192
- FR-A- 964 069
- FR-A- 2 658 582
- GB-A- 1 317 358

## Description

L'invention concerne des profilés tubulaires destinés notamment à être utilisés comme conduits de passage de fluide, ou comme silencieux d'admission ou d'échappement, dans le domaine de l'industrie automobile, dans le bâtiment et dans l'industrie des machines et des moteurs, par exemple.

Lorsqu'il faut atténuer la transmission des sons dans des fluides en circulation dans des tubes, on utilise en général des matériaux acoustiquement absorbants qui sont disposés à l'intérieur des tubes, et/ou des résonateurs accordés sur des fréquences ou des bandes de fréquences à atténuer et qui sont connectés en série ou en parallèle avec les tubes de passage de fluide. La mise en oeuvre de ces moyens connus, lorsqu'ils sont réellement efficaces, s'avère en général délicate et coûteuse.

De façon générale, on sait déjà fabriquer des tubes ou des tuyaux à paroi renforcée en formant sur la paroi interne d'un tube des nervures radiales de faible hauteur enroulées en spirale autour de l'axe du tube (voir le document FR-A-2 658 582) ou bien par enroulement en spirale d'un profilé tubulaire extrudé, les spires étant jointives et soudées entre elles (voir par exemple les brevets US 5,060,698 et EPO 0,418,760). On sait également, par exemple par le brevet DE 3.930.528, former un tuyau à paroi renforcée par enroulement en spirale d'un tube extrudé, puis enroulement en spirale d'un renforcement entre les spires du tube. Cependant, cette technique connue ne permet que la fabrication de tuyaux à paroi renforcée, en général de grand diamètre, qui ne peuvent servir de silencieux.

L'invention a notamment pour but d'apporter une solution simple, efficace et peu coûteuse à ces problèmes.

Elle a pour objet un profilé tubulaire qui constitue un conduit flexible de passage de fluide et un silencieux, par exemple d'admission ou d'échappement pour moteur, et qui, de fabrication, présente des qualités intrinsèques d'atténuation des sons et de conservation d'une forme initiale lors des prises de rayon.

Elle propose, à cet effet, un profilé tubulaire, à usage de conduit flexible de passage de fluide, comportant des nervures ou cloisons internes sensiblement radiales enroulées en hélice autour de l'axe longitudinal du profilé, caractérisé en ce que lesdites nervures ou cloisons internes s'étendent radialement sur au moins la moitié environ du rayon interne du profilé et constituent des moyens empêchant les propagations directes des ondes de pression acoustique à l'intérieur du profilé.

Un tel profilé fournit de très bon résultats quand il est utilisé comme silencieux, la présence des cloisons ou nervures radiales internes enroulées en hélice permettant d'atténuer efficacement les sons, en empêchant les propagations directes des ondes de pression acoustique.

De plus, les nervures ou cloisons internes à enroulement hélicoïdal limitent l'écrasement radial du profilé lors des prises de rayon et lui permettent de conserver une forme sensiblement constante sur toute sa longueur.

Le profilé selon l'invention peut être réalisé au moins en partie en matière cellulaire ou expansée, de façon à favoriser l'atténuation des sons.

En variante, ce profilé peut être réalisé en deux matières de nature et/ou de dureté différentes.

De préférence, il est réalisé par extrusion, dans des matières élastomères ou thermoplastiques. Il peut également être réalisé par moulage.

L'invention sera mieux comprise et d'autres avantages de celle-ci apparaitront plus clairement à la lecture de la description qui suit, faite à titre d'exemple en référence aux dessins annexés dans lesquels :
la figure 1 est une vue schématique partielle en coupe et en perspective d'un profilé tubulaire selon l'invention;
les figures 2 à 8 sont des vues schématiques partielles en coupe de variantes de réalisation de ce profilé;
les figures 9 à 13 illustrent schématiquement diverses possibilités d'utilisation du profilé selon l'invention.

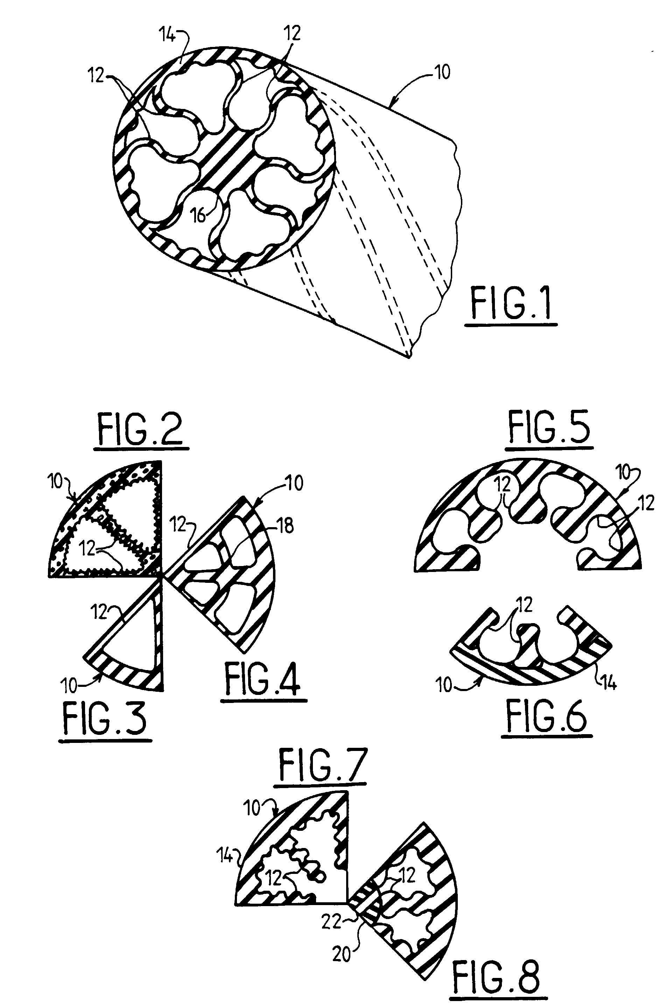

On se réfère d'abord à la figure 1, dans laquelle la référence 10 désigne un profilé tubulaire selon l'invention, qui est de forme générale cylindrique à section circulaire et qui peut être réalisé par extrusion en élastomère souple ou semi-rigide par exemple.

Le profilé 10 comporte une pluralité de nervures ou cloisons internes 12 sensiblement radiales qui s'étendent entre sa paroi périphérique 14 et un noyau interne axial 16.

Comme on le voit bien en figure 1, ces nervures ou cloisons internes 12 sont de forme ondulée en section transversale et sont de plus enroulées en hélice à spires non jointives autour de l'axe longitudinal ou du noyau axial 16 du profilé, en délimitant entre elles des canaux internes parallèles qui sont séparés les uns des autres par les cloisons 12 et qui s'enroulent en hélice autour de l'axe du profilé.

Lorsque ce profilé est utilisé comme silencieux ou pour l'écoulement d'un fluide, une onde de pression acoustique véhiculée par le fluide est réfléchie une multitude de fois dans les canaux hélicoïdaux et ne peut se propager directement d'une extrémité à l'autre du profilé. De plus, les formes non planes des cloisons ou nervures internes 12 accentuent les diffractions de l'onde acoustique.

Le moment cinétique en rotation du fluide est acquis à l'entrée du profilé, puis se conserve dans l'écoulement du fluide. La perte de charge supplémentaire est principalement due à l'augmentation de la surface de friction en contact avec le fluide, ainsi qu'à la forme des entrées et sorties du profilé. Il en résulte que les pertes de charge du fluide ne sont pas aggravées de façon gênante par l'enroulement en hélice des canaux du profilé.

Enfin, le profilé 10 peut, dans son ensemble, être réalisé en matière acoustiquement absorbante, par exemple en matière cellulaire ou expansée.

Un certain nombre de variantes de réalisation ont été représentées à titre d'exemples dans les figures 2 à 8.

Dans le mode de réalisation de la figure 2, le profilé 10 est réalisé entièrement en matière cellulaire ou expansée et ses cloisons internes 12 sont rectilignes en section transversale.

Dans la forme de réalisation de la figure 3, les cloisons 12 sont également rectilignes en section transversale, mais le profilé est dans son ensemble réalisé en matière compacte.

Dans la forme de réalisation de la figure 4, le profilé 10 est en matière compacte et ses cloisons internes 12, qui sont par exemple rectilignes en section transversale, sont raccordées entre elles par au moins une cloison annulaire 18, ce qui permet de doubler le nombre de compartiments formés à l'intérieur du profilé 10.

Dans la forme de réalisation de la figure 5, le profilé 10 est réalisé en matière compacte, il ne comprend pas le noyau axial 16 du mode de réalisation de la figure 1, et les nervures ou cloisons internes 12 s'étendent à l'intérieur du profilé sensiblement sur la moitié du rayon interne de ce profilé.

En outre, les côtés radiaux des nervures 12 en section transversale sont de forme incurvée concave, leur sommet ou extrémité libre étant de forme incurvée convexe.

Dans ce cas, les canaux que délimitent les nervures ou cloisons internes 12 à l'intérieur du profilé 10 communiquent entre eux.

En élargissant les sommets des nervures ou cloisons internes 12, on peut presque fermer les canaux internes du profilé en les laissant communiquer avec la cavité axiale par des fentes étroites. Dans ce cas, on peut faire circuler le fluide soit à l'intérieur des canaux internes, la cavité axiale formant cavité résonnante, soit à l'intérieur de la cavité axiale, les canaux internes formant des cavités de résonance.

Dans le mode de réalisation de la figure 6, les nervures 12 internes du profilé 10 ont à peu près la même forme que dans le mode-de réalisation de la figure 5, mais sont réalisées en une matière différente de celle de la paroi périphérique 14 du profilé, par exemple en matière cellulaire ou expansée lorsqu'on veut favoriser l'atténuation acoustique ou en une matière plus rigide lorsqu'on veut favoriser le positionnement du profilé.

Dans le mode de réalisation de la figure 7, les nervures internes 12 s'étendent sur environ les 2/3 ou les 3/4 du rayon interne du profilé 10 à partir de sa surface périphérique 14 et ont, en section transversale un contour extérieur à ondulations multiples de faible amplitude.

Le profilé 10 est alors dépourvu de noyau axial.

Dans la forme de réalisation de la figure 8, les nervures ou cloisons internes 12 ont la même forme que dans le mode de réalisation de la figure 7, mais leur extrémité libre s'appuie sur un noyau interne 20 de forme cylindrique, rapporté à l'intérieur du profilé et éventuellement réalisé en une matière différente de celle du profilé 10. Ce noyau interne 20 peut comprendre des passages ou perçages 22 établissant des communications entre des canaux internes du profilé 10.

De façon avantageuse, le profilé selon l'invention peut être réalisé par extrusion continue en une seule opération sans reprise, en utilisant une tête d'extrusion tournante disposée à l'intérieur d'une filière d'extrusion. La rotation de la tête peut être motorisée ou bien libre, la tête d'extrusion étant alors entraînée en rotation par le flux de matière extrudée, lui-même mis en rotation autour de l'axe de la filière d'extrusion au moyen de pales ou d'aubes de guidage.

En variante, le profilé peut être réalisé par moulage.

Le profilé peut être réalisé en une ou plusieurs matières thermoplastiques ou en une ou plusieurs matières élastomères.

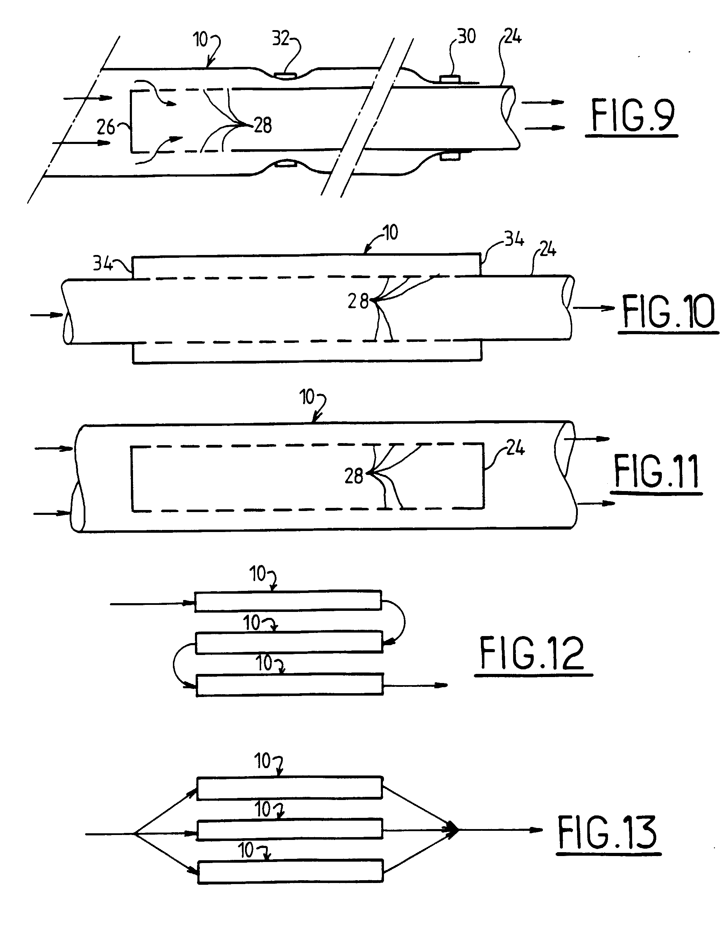

On fera maintenant référence aux figures 9 et 10 qui représentent schématiquement plusieurs possibilités d'utilisation d'un profilé selon l'invention.

En figure 9, un profilé 10 selon l'invention, par exemple du type représenté en figure 5, est monté autour d'un tube 24 dont l'extrémité 26 engagée à l'intérieur du profilé 10 est fermée axialement, le tube 24 comportant des perforations ou orifices radiaux 28 au voisinage de cette extrémité fermée 26.

L'extrémité de droite (sur le dessin) du profilé 10 est fermée par exemple par serrage sur la surface périphérique du tube 24, au moyen d'une pièce annulaire 30. Une autre pièce annulaire 32, de même type que la pièce annulaire 30, peut être utilisée pour resserrer une partie intermédiaire du profilé 10 sur le tube 24, sans fermer complètement les canaux internes du profilé, de façon à y créer des cols.

Le système de la figure 9 forme un silencieux à résonateur, permettant d'atténuer certaines fréquences acoustiques gênantes, notamment dans les basses fréquences. Le fluide pénètre dans ce système par l'extrémité de gauche (sur le dessin) du profilé 10 puis passe à l'intérieur du tube 24 par ses orifices ou perforations 28. La partie du profilé 10 comprise entre les pièces annulaires 30 et 32 constitue une cavité résonante accordée sur la fréquence à atténuer.

En variante, on peut monter plusieurs pièces annulaires 32 de rétrécissement sur le profilé 10 pour former des cols successifs, ou bien on peut fermer les canaux internes de ce profilé à des endroits différents, pour créer des cavités résonantes différentes et atténuer ainsi plusieurs fréquences acoustiques.

Dans la forme de réalisation de la figure 10, un profilé 10 selon l'invention est monté autour d'un tube 24 de circulation de fluide et est fermé à ses deux extrémités axiales 34. Dans sa partie comprise à l'intérieur du profilé 10, le tube interne 24 comprend des séries d'orifices ou de perforations 28 débouchant à l'intérieur du profilé 10 dont les canaux internes constituent des cavités de résonance.

Dans la forme de réalisation de la figure 11, la structure est à l'inverse de celle représentée en figure 10 : c'est le profilé 10 qui est ouvert à ses extrémités et qui sert à la circulation du fluide, tandis que le tube 24 est fermé à ses extrémités et forme une cavité de résonance.

Dans le mode de réalisation de la figure 12, plusieurs profilés 10 selon l'invention sont transversalement alignés ou juxtaposés pour constituer un ensemble compact et sont reliés en série pour former un silencieux de faible longueur axiale.

Dans le mode de réalisation de la figure 13, les profilés 10 selon l'invention sont transversalement alignés ou juxtaposés pour former un ensemble compact, et sont alimentés en parallèle par un écoulement de fluide.

Le profilé selon l'invention est utilisable comme conduit flexible de passage de fluide dans un véhicule automobile, comme silencieux à l'admission ou à l'échappement sur un moteur thermique ou sur une machine pneumatique, et comme gaine de ventilation dans des immeubles, des bâtiments, des navires, etc.

## Revendications

1. Profilé tubulaire, à usage de conduit flexible de passage de fluide, comportant des nervures ou cloisons internes (12) sensiblement radiales enroulées en hélice autour de l'axe longitudinal du profilé, caractérisé en ce que lesdites nervures ou cloisons internes (12) s'étendent radialement sur au moins la moitié environ du rayon interne du profilé et constituent des moyens empêchant les propagations directes des ondes de pression acoustique à l'intérieur du profilé.

2. Profilé selon la revendication 1, caractérisé en ce que lesdites nervures ou cloisons internes (12) ont une dimension radiale inférieure au rayon interne du profilé.

3. Profilé selon la revendication 1 ou 2, caractérisé en ce que lesdites nervures ou cloisons internes (12) sont raccordées entre elles le long de l'axe longitudinal du profilé et délimitent des canaux parallèles enroulés en hélice autour de l'axe du profilé.

4. Profilé selon l'une des revendications précédentes, caractérisé en ce que lesdites nervures ou cloisons internes (12) ont une forme ondulée en section transversale.

5. Profilé selon l'une des revendications 1 à 3, caractérisé en ce que lesdites nervures ou cloisons internes (12) ont une forme rectiligne en section transversale.

6. Profilé selon l'une des revendications précédentes, caractérisé en ce que lesdites nervures ou cloisons internes (12) sont raccordées entre elles le long de l'axe du profilé par une partie pleine (16) formant un noyau interne axial.

7. Profilé selon la revendication 6, caractérisé en ce que le noyau interne axial (20) est une pièce rapportée.

8. Profilé selon l'une des revendications précédentes, caractérisé en ce que lesdites nervures ou cloisons internes (12) sont raccordées entre elles par au moins une cloison annulaire (18) et délimitent avec celle-ci une pluralité de canaux parallèles enroulés en hélice autour de l'axe du profilé.

9. Profilé selon l'une des revendications précédentes, caractérisé en ce qu'il est réalisé au moins en partie en matière cellulaire ou expansée, ou en ce qu'il est réalisé en au moins deux matières différentes.

10. Profilé selon l'une des revendications précédentes, caractérisé en ce qu'il est réalisé par extrusion.

11. Profilé selon la revendication 10, caractérisé en ce qu'il est réalisé par extrusion continue en une seule opération, au moyen d'une tête d'extrusion tournante, motorisée ou libre en rotation.

12. Profilé selon l'une des revendications précédentes, caractérisé en ce qu'il est réalisé en matières élastomères ou thermoplastiques.

13. Profilé selon l'une des revendications 1, 2, 3, 4, 5, 8 à 12, caractérisé en ce qu'il est fermé à au moins une extrémité et constitue une cavité de résonance autour d'un tube (24) de passage de fluide qui comporte des orifices (28) de communication avec les canaux parallèles internes du profilé.

14. Profilé selon la revendication 13, caractérisé en ce que sa section interne est localement réduite par au moins une pièce annulaire (32) montée serrée sur le profilé (10).

15. Profilé selon l'une des revendications 1, 2, 4, 5, 8 à 12, caractérisé en ce qu'il contient un tronçon de tube (24) perforé, fermé à ses extrémités et formant cavité de résonance.

## Patentansprüche

1. Rohrförmiges Profil zum Gebrauch als flexible Strömungsmittelleitung, mit inneren Rippen oder Trennwänden (12), die im wesentlichen radial und wendelartig um die Längsachse des Profils gewunden sind, dadurch **gekennzeichnet,** daß die genannten, inneren Rippen oder Trennwände (12) sich radial über mindestens etwa die Hälfte des Innenradius des Profils erstrecken und Mittel bilden, die die unmittelbaren Ausbreitungen von Schalldruckwellen im Inneren des Profils verhindern.

2. Profil nach Anspruch 1, dadurch **gekennzeichnet,** daß die genannten, inneren Rippen oder Trennwände (12) eine radiale Abmessung aufweisen, die kleiner ist als der Innenradius des Profils.

3. Profil nach Anspruch 1 oder 2, dadurch **gekennzeichnet,** daß die genannten, inneren Rippen oder Trennwände (12) miteinander längs der Längsachse des Profils verbunden sind und parallele Kanäle begrenzen, die wendelförmig um die Achse des Profils gewunden sind.

4. Profil nach einem der vorangehenden Ansprüche, dadurch **gekennzeichnet,** daß die genannten, inneren Rippen oder Trennwände (12) im Querschnitt eine gewellte Form aufweisen.

5. Profil nach einem der Ansprüche 1 bis 3, dadurch **gekennzeichnet,** daß die genannten, inneren Rippen oder Trennwände (12) im Querschnitt eine geradlinige Form ausweisen.

6. Profil nach einem der vorangehenden Ansprüche, dadurch **gekennzeichnet,** daß die genannten, inneren Rippen oder Trennwände (12) miteinander längs der Achse des Profils durch einen massiven Abschnitt (16) verbunden sind, der einen inneren, axialen Kern bildet.

7. Profil nach Anspruch 6, dadurch **gekennzeichnet,** daß der innere, axiale Kern (20) ein zusammengesetztes Teil ist.

8. Profil nach einem der vorangehenden Ansprüche, dadurch **gekennzeichnet,** daß die genannten, inneren Rippen oder Trennwände (12) miteinander durch mindestens eine kreisringförmige Trennwand (18) verbunden sind und zusammen mit dieser eine Vielzahl paralleler Kanäle begrenzen, die wendelförmig rund um die Achse des Profils gewunden sind.

9. Profil nach einem der vorangehenden Ansprüche, dadurch **gekennzeichnet,** daß es mindestens teilweise aus zellenartigem oder aufgeweitetem Material ausgebildet ist, oder daß es aus mindestens zwei unterschiedlichen Materialien gebildet ist.

10. Profil nach einem der vorangehenden Ansprüche, dadurch **gekennzeichnet,** daß es durch Extrusion gebildet ist.

11. Profil nach Anspruch 10, dadurch **gekennzeichnet,** daß es durch kontinuierliche Extrusion in einer einzigen Vorgang mittels eines rotierenden Extrusionskopfes gebildet ist, der angetrieben oder frei drehbar ist.

12. Profil nach einem der vorangehenden Ansprüche, dadurch **gekennzeichnet,** daß es aus elastomeren oder thermoplastischen Materialien gebildet ist.

13. Profil nach einem der Ansprüche 1, 2, 4, 5, 8 bis 12, dadurch **gekennzeichnet,** daß es an mindestens einem Ende geschlossen ist und einen Resonanzhohlraum rund um ein Rohr (24) zum Durchtritt von Strömungsmitteln bildet, das Öffnungen (28) zur Verbindung mit den inneren, parallelen Kanälen des Profils aufweist.

14. Profil nach Anspruch 13, dadurch **gekennzeichnet,** daß sein innerer Querschnitt örtlich durch mindestens ein kreisringförmiges Teil (32) verringert ist, das im Klemmsitz auf dem Profil (10) angebracht ist.

15. Profil nach einem der Ansprüche 1, 2, 4, 5, 8 bis 12, dadurch **gekennzeichnet,** daß es ein perforiertes Rohrstück (24) aufweist, das an seinen Enden geschlossen ist und einen Resonanzhohlraum bildet.

## Claims

1. A tubular section member for use as a fluid flow hose, said member comprising substantially radial internal partitions or ribs (12) wound helically around the longitudinal axis of the section member, said member being characterized in that said internal partitions or ribs (12) extend radially over at least about half of the inside radius of the section member and constitute means preventing sound pressure waves from propagating directly along the inside of the section member.

2. A section member according to claim 1, characterized in that said internal partitions or ribs (12) have a radial extent that is less than the inside radius of the section member.

3. A section member according to claim 1 or 2, characterized in that said internal partitions or ribs (12) are interconnected along the longitudinal axis of the section member and define parallel channels that are wound helically around the axis of the section member.

4. A section member according to any preceding claim, characterized in that said internal partitions or ribs (12) have a cross-section that is corrugated in shape.

5. A section member according to any one of claims 1 to 3, characterized in that said internal partitions or ribs (12) have a cross-section that is rectilinear in shape.

6. A section member according to any preceding claim, characterized in that said internal partitions or ribs (12) are interconnected along the axis of the section member by a solid portion (16) forming an axial internal core.

7. A section member according to claim 6, characterized in that the axial internal core (20) is a separate part.

8. A section member according to any preceding claim, characterized in that said internal partitions or ribs (12) are interconnected by at least one annular partition (18) co-operating therewith to define a plurality of parallel channels helically wound around the axis of the section member.

9. A section member according to any preceding claim, characterized in that it is made at least in part out of expanded or cellular material, or in that it is made out of at least two different materials.

10. A section member according to any preceding claim, characterized in that it is made by extrusion.

11. A section member according to claim 10, characterized in that it is made by continuous extrusion in a single operation by means of a rotating extrusion head that is motor-driven or rotates freely.

12. A section member according to any preceding claim, characterized in that it is made of thermoplastic or elastomer materials.

13. A section member according to any one of claims 1, 2, 4, 5, and 8 to 12, characterized in that is closed at at least one end, and constitutes a resonance cavity around a fluid flow tube (24) which includes orifices (28) communicating with the internal parallel channels of the section member.

14. A section member according to claim 13, characterized in that its internal section is locally reduced by at least one annular part (32) clamped on the section member (10).

15. A section member according to any one of claims 1, 2, 4, 5, and 8 to 12, characterized in that it contains a perforated length of tube (24) closed at its ends and forming a resonance cavity.
